# EUROPEAN PATENT APPLICATION

(11) **EP 1 593 639 A1**
(43) Date of publication of application: **09.11.2005**
(21) Application number: 04026816.1
(22) Date of filing: 11.11.2004
(51) Int. Cl.: B65H 75/18, A01K 89/01

(54) **Fishing reel**

(30) Priority: 05.05.2004 IT BO20040284
(71) Applicant: Holding Ferrari S.R.L., 40018 San Pietro in Casale (Prov. of Bologna) (IT)
(72) Inventor: Pareschi, Sara, 44028 Poggio Renatico (Prov.of Ferrara) (IT)
(74) Representative: Modiano, Micaela Nadia

(57) **Abstract**

A fishing reel, comprising a body (2) provided with a bracket (2a) for connection to a handle of a fishing rod, inside which gear means are accommodated and functionally associated with a lateral crank (3) of the body (2) for the rotation of a rotor (4), which is mounted so that it can rotate in a front part of the body (2), and for the alternating translational motion, according to a preset stroke, of a shaft (5), which is coaxial to the rotor (4) and exits from the body (2) and on which a spool (6) is detachably fitted; the spool (6) forms two substantially conical magazines (6a, 6b) for winding a corresponding number of lines.

## Description

The present invention relates to a fishing reel.

Fishing reels are known which are generally constituted by a body, which is provided with a bracket for connection to the handle of a fishing rod and inside which gear means are accommodated.

These means are functionally associated with a lateral crank of the body in order to turn a rotor provided in a front part of the body and to produce the alternating translational motion, according to a preset stroke, of a shaft that is coaxial to the rotor and exits from the body and on which a spool that forms a magazine for winding the line is detachably fitted.

The rotor is provided with two arms, on which a bow is fitted so that it can rotate; the bow is provided, at one end, with a guiding element for the line to be wound on the magazine of the spool, and the spool is coupled to the shaft by a closing button.

Moreover, the reel may comprise friction devices, which allow the controlled unwinding of the line (depending on different traction forces) and can be adjusted by means of appropriately provided manual controls.

Clearly, the spool allows to use only one type of line (wound beforehand); for this reason, spools have been studied which are designed to be fitted alternately on the reel and in which the magazine has various capacities in order to wind thereon lines having different diameters and/or made of different materials, to be used according to the preferred fishing technique or according to the contingent situations that may arise.

When the angler needs to change line, he wastes time while looking for the replacement spool among his equipment and then storing the replaced spool.

The replacement spool occupies a certain space, increasing the total bulk (and weight) of the equipment of the angler, when it is instead extremely convenient to minimize the equipment to be carried, especially for certain types of fishing that require frequent and long changes of location.

The aim of the present invention is to solve the drawbacks noted above, by providing a fishing reel that allows to minimize the equipment that needs to be carried, minimizing the space occupation of the equipment and reducing the time required to replace the spool.

Within this aim, an object of the invention is to provide a fishing reel that, thanks to its particular constructive characteristics, is capable of giving the greatest assurances of reliability and safety in use.

Another object of the present invention is to provide a fishing reel that is simple, relatively easy to provide in practice, effective in operation, and also competitive from an economic standpoint.

This aim and these and other objects that will become better apparent hereinafter are achieved by a fishing reel, which comprises a body inside which gear means are accommodated and functionally associated with a lateral crank of said body for the rotation of a rotor, which is mounted so that it can rotate in a front part of said body, and for the alternating translational motion, according to a preset stroke, of a shaft, which is coaxial to the rotor and exits from said body and on which a spool is detachably fitted, characterized in that said spool forms two substantially conical magazines for winding a corresponding number of lines.

Further characteristics and advantages of the present invention will become better apparent from the following detailed description of a preferred but not exclusive embodiment of a fishing reel according to the invention, illustrated by way of non-limiting example in the accompanying drawings, wherein:
Figure 1 is a perspective view of the fishing reel with a front friction apparatus;
Figure 2 is an enlarged-scale perspective view of the spool with separate magazines and of a line protecting and locking ring;
Figure 3 is a perspective view of the reel, with a rear friction device;
Figure 4 is a perspective view of the reel, with the front friction device and the rear friction device.

With reference to the figures, the reel according to the invention is generally designated by the reference numeral 1.

The reel 1 is constituted by a body 2, which is provided with a bracket 2a for connection to the handle of a fishing rod, inside which gear means, not shown in the figures since they are known, are accommodated. Such means are functionally associated with a lateral crank 3 for the rotation of a rotor 4, which is mounted so that it can rotate in a front part of the body 2, and for the alternating translational motion, according to a preset stroke, of a shaft 5, which is coaxial to the rotor 4, exits from the body 2 and has a spool 6 detachably fitted thereon.

The spool 6 has an elongated shape with cylindrical symmetry and comprises two portions having a reduced cross-section, which form respective substantially conical magazines 6a, 6b (in an extreme case, having no taper), for winding a corresponding number of lines.

In particular, the spool 6 is constituted by the two separate magazines 6a and 6b, which can be mutually coupled by interlocking along complementary contact surfaces; the magazines 6a, 6b are substantially shaped like the front portion of a conventional spool and are mutually interchangeable.

The spool 6 comprises at least one wing 7 for removably locking the end of the lines wound thereon (individually or simultaneously); moreover, the magazines 6a, 6b, are each adapted to be covered, when not in use, with a ring A for protecting and locking said line.

The spool 6 is provided with an axial hole for fitting on the shaft 5, and on each end of the magazines 6a, 6b there is a substantially cylindrical receptacle 8, which is adapted to accommodate a closing button 9. The button 9 can be engaged detachably on the shaft 5 in order to prevent the extraction of the spool 6.

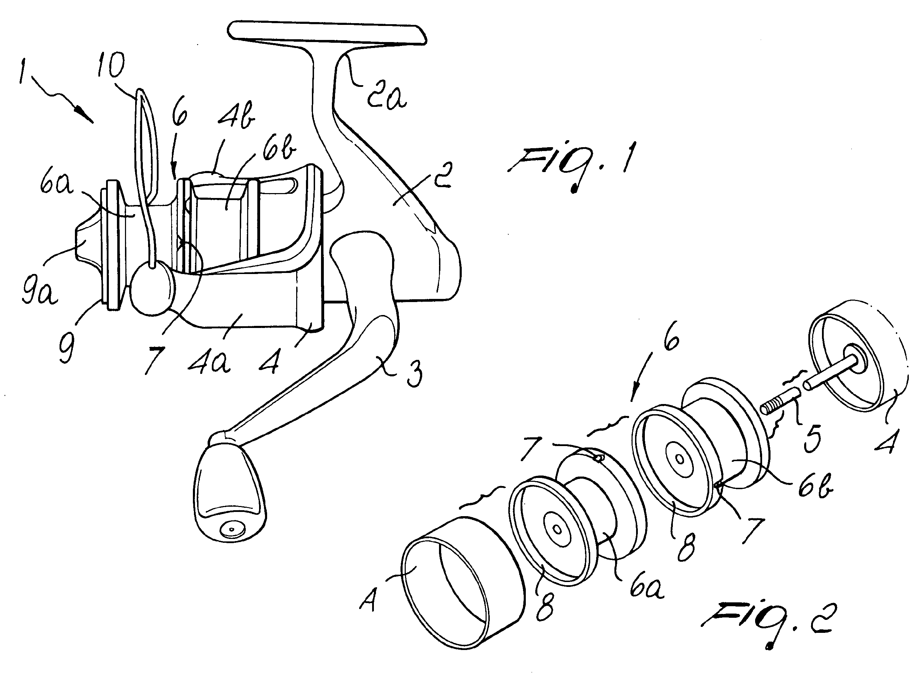

The rotor 4 comprises two elongated arms 4a and 4b, which support, at their ends, a bow 10, which is substantially aligned with the magazine, of the magazines 6a and 6b, that is located furthest from the body 2 of the reel 1 when the spool is correctly fitted. In a front part of the reel 1, as shown in Figure 1, there is a manually adjusted friction apparatus (not shown in the drawings), which is functionally associated with the spool 6 for the controlled rotation thereof on the shaft 5; said apparatus can be locked by means of the button 9, which for this purpose is provided with a grip tab 9a; said apparatus is designed to adjust the force required to unwind the line from the spool 6.

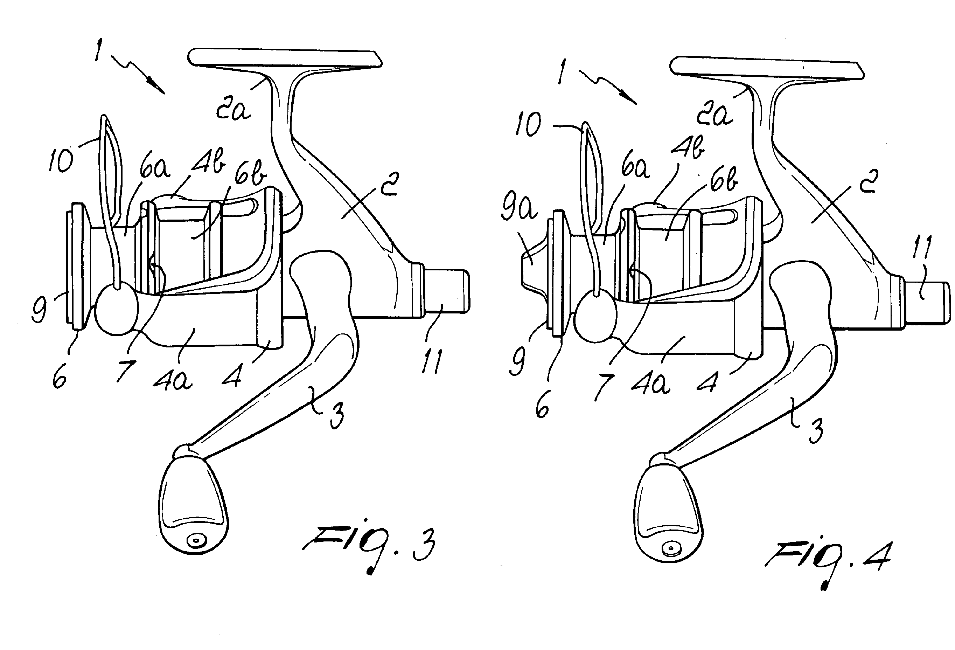

In another embodiment, controls 11 of a friction device with manual adjustment (not shown in the drawings) are fitted in a rear portion of the body 2, as shown in Figure 3; such friction device is functionally associated with the shaft 5 for the controlled rotation thereof with respect to the body 2 (which is also suitable to adjust the unwinding force).

In another embodiment, as shown in Figure 4, the reel 1 comprises both the device with rear actuation and the apparatus with front actuation, which operate both independently and synergistically with each other to adjust the line unwinding force.

In a further embodiment, the spool 6, which comprises the two magazines 6a and 6b, is formed monolithically, i.e., the magazines 6a, 6b cannot be separated.

In practical operation, the angler, by turning the crank 3, winds the line on the magazine 6a that lies furthest from the body 2, while the unused line wound on the other magazine 6b is locked removably with a snap action by the elastically deformable wing 7 and by the ring A.

When necessary, the angler can quickly reverse the spool 6 in order to use the second line without having to completely replace the spool 6 with another spare spool, wasting time in looking for it and in storing the first spool. Advantageously, the fact that the magazines 6a, 6b are interchangeable (also with other magazines) allows the angler to prepare an optimum configuration for the spool 6 by selecting the lines to be used during the fishing session.

In practice it has been found that the invention fully achieves the intended aim and objects, since the reel, by not requiring a further replacement spool in order to use a second line, allows to reduce to the essentials the apparatus that needs to be carried, minimizing the space occupation of the equipment. Moreover, it thus provides an advantage in terms of time, since by simply and rapidly reversing the spool 6 it allows to use the second line.

The invention thus conceived is susceptible of numerous modifications and variations, all of which are within the scope of the appended claims; all the details may further be replaced with other technically equivalent ones.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

In practice, the materials used, as well as the shapes and dimensions, may be any according to requirements and to the state of the art without thereby abandoning the protective scope of the appended claims.

The disclosures in Italian Patent Application No. BO2004A000284 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A fishing reel, comprising a body (2) inside which gear means are accommodated and functionally associated with a lateral crank (3) of said body (2) for the rotation of a rotor (4), which is mounted so that it can rotate in a front part of said body (2), and for the alternating translational motion, according to a preset stroke, of a shaft (5), which is coaxial to the rotor (4) and exits from said body (2) and on which a spool (6) is detachably fitted, **characterized in that** said spool (6) forms two substantially conical magazines (6a, 6b) for winding a corresponding number of lines.

2. The fishing reel according to claim 1, **characterized in that** said spool (6) has a shape provided with cylindrical symmetry, which comprises two portions having a reduced cross-section, which form said magazines (6a, 6b), said spool (6) being provided with an axial hole for fitting on said shaft (5).

3. The fishing reel according to claim 2, **characterized in that** said magazines (6a, 6b) have the same outside diameter.

4. The fishing reel according to claim 2, **characterized in that** said magazines (6a, 6b) have different outside diameters.

5. The fishing reel according to claim 1, **characterized in that** said spool (6) comprises at least one line locking element.

6. The fishing reel according to claim 5, **characterized in that** said locking element is constituted by an elastically deformable wing (7) for the detachable snap locking of the line.

7. The fishing reel according to claim 1, **characterized in that** said two magazines (6a, 6b) are separate and substantially shaped like the front portion of a conventional spool and can be coupled detachably with an interlocking action.

8. The fishing reel according to claim 1 or claim 7, **characterized in that** said spool comprising said magazines (6a, 6b) is formed monolithically.

9. The fishing reel according to claim 7, **characterized in that** said magazines (6a, 6b) are interchangeable.

10. The fishing reel according to claim 1, **characterized in that** said rotor (4) has two elongated arms (4a, 4b), on which a bow (10) is fitted so that it can rotate, said bow (10) being substantially aligned with the magazine (6a) that lies furthest from said body (2) when said spool (6) is fitted on said shaft (5).

11. The fishing reel according to claim 1, **characterized in that** said shaft (5) is substantially as long as the axial extension of said spool (6).

12. The fishing reel according to claim 1, **characterized in that** the rear portion of said body (2) comprises a manually-adjustable friction device, which is functionally associated with said shaft (5), for the controlled rotation thereof with respect to said body (2).

13. The fishing reel according to claim 1, **characterized in that** a front part of said reel (1) comprises a manually-adjusted friction apparatus, which is functionally associated with said spool (6), for the controlled rotation thereof on said shaft (5), said apparatus being lockable by means of a button (9) for closing said spool (6) on said shaft (5).

14. The fishing reel according to claims 8 and 9, **characterized in that** it comprises said device with rear actuation and said apparatus with front actuation, which optionally operate synergistically.

15. The fishing reel according to claim 1, **characterized in that** at least one of said magazines (6a, 6b) is adapted to be covered by a ring (A) for protecting and locking the line.
